# EUROPEAN PATENT SPECIFICATION

(11) **EP 1 695 479 B1**
(45) Date of publication and mention of the grant of the patent: **20.02.2008**
(21) Application number: 05768126.4
(22) Date of filing: 28.07.2005
(51) Int. Cl.: H04L 5/02, H04B 3/02

(54) **SYSTEM FOR SIGNALS DISTRIBUTION TO A PLURALITY OF USERS**
SYSTEM ZUR SIGNAL VERTEILUNG AN EINE MEHRZAHL VON BENUTZERN
SYSTEME POUR LA DISTRIBUTION DE SIGNAUX A UNE PLURALITE D'UTILISATEURS

(30) Priority: 29.07.2004 IT TO20040528
(43) Date of publication of application: 30.08.2006
(73) Proprietor: BPT S.P.A., 33079 Sesto al Reghena, PN (IT)
(72) Inventor: POLO FILISAN, Andrea, I-33080 Porcia (IT); CRIVELLARO, Renato, I-35019 Tombolo (IT); LORENZI, Marco, I-33080 Porcia (IT)
(74) Representative: Dini, Roberto
(86) International application number: PCT/IB2005/002234
(87) International publication number: WO 2006/013440

(56) References cited:
- WO-A-99/37092
- US-B1- 6 430 742

## Description

The present industrial invention relates to a system for the distribution of signals to a plurality of users according to the preamble of claim 1.

Nowadays, there is an increasing necessity of receiving and exchanging information; in the world of telecommunications, information is transferred in many ways and through various means: starting with the old twisted pair telephone cable ending up to the digital radio broadcasting of television programs.

Therefore, a large quantity of information arrives at a user's home or office in a variety of ways, differing from one another in modulation, frequency allocation and transmission means; as a matter of fact, this means the necessity of using complex wiring systems which, besides being very expensive due to the large number of cables and components employed, often turn out to be not very flexible, in that they cannot be exploited in the event that the user wants to receive signals of a different type. In particular, when a new service is required, e.g. Ethernet network, new cables have to be installed.

In order to solve the above problems, the international publication WO99 37093 discloses a system for the distribution of a plurality of digital audio and/or video signals in a premises, in particular television signals complying with different standards, wherein every single user receives digital signals being routed over a coaxial cable in a predefined channel being accessible to said user only. For this purpose, it is necessary to employ transmodulators, i.e. devices which select the digital signal chosen by the user, demodulate it and re-modulate it, e.g. in QAM (Quadrature Amplitude Modulation), convert it into the channel reserved to the user and send it to a mixer which then sends the signal to the user.

This system, therefore, allows to reduce the number of cables used in the building, but is rather costly due to the need of using a plurality of devices for the modulation, demodulation and frequency translation of the different signals received.

Like all other known systems, this system also suffers the drawback that, when the user wants to add or move television or data signal sockets (e.g. because the intended use of the rooms has changed), the system requires new wiring to said sockets, resulting in increasing costs.

An other system for the distribution of signals in a building is disclosed by US 6,430,742. According to this system terrestrial and satellite TV signals, along with digital data received by satellite are distributed over the same coaxial cable. For distribution on the coaxial cable, digital data signals are converted in a lower frequency band in the range of the terrestrial Tv signals. Each group of users is provided with a converter for putting the digital data in a frequency band which can be used by standard satellite modems.

This system still requires transmodulation of signals which are not TV signals, and present the drawback that if further services have to be provided to the users (e.g. video intercom) a new cabling is required.

The object of the present invention is to solve the above problems of the known art by providing a system being less costly than those according to the known art.

A further object of the present invention is to provide a system allowing for easy and economical modifications whenever the user wants to add or move signal sockets within his/her house or office.

These and further objects of the present invention are achieved through a system for the distribution of signals having the features described in the annexed claims, which form an integral part of the present invention.

Further objects and advantages of the present invention will become apparent from the following detailed description and annexed drawings, supplied by way of non-limiting example, wherein:
- Fig. 1 shows a typical spectral distribution of signals being receivable by a user.
- Fig. 2 shows a known signal distribution system.
- Fig. 3 shows a signal distribution system according to the invention.
- Fig. 4 shows a block diagram of a switching block according to an embodiment of the system according to the invention.
- Fig. 5 shows a signal socket block.
- Fig. 6 shows an application of the system according to the invention.

In the following description, blocks having the same reference number in the various illustrations perform the same functions.

As said, nowadays there is a distinct need of distributing a plurality of television and/or audio and/or data signals complying with different transmission standards, i.e. multimedia signals.

This distribution may take place in apartments of a premises, in single houses, in groups of one or more offices and in general in places wherein multimedia signals are made available to one or more users.

The development of digital technology, and in particular of signal compression techniques, has led to the outset of a multiplicity of so-called "multimedia" services being provided through terrestrial, cable or satellite broadcasting.

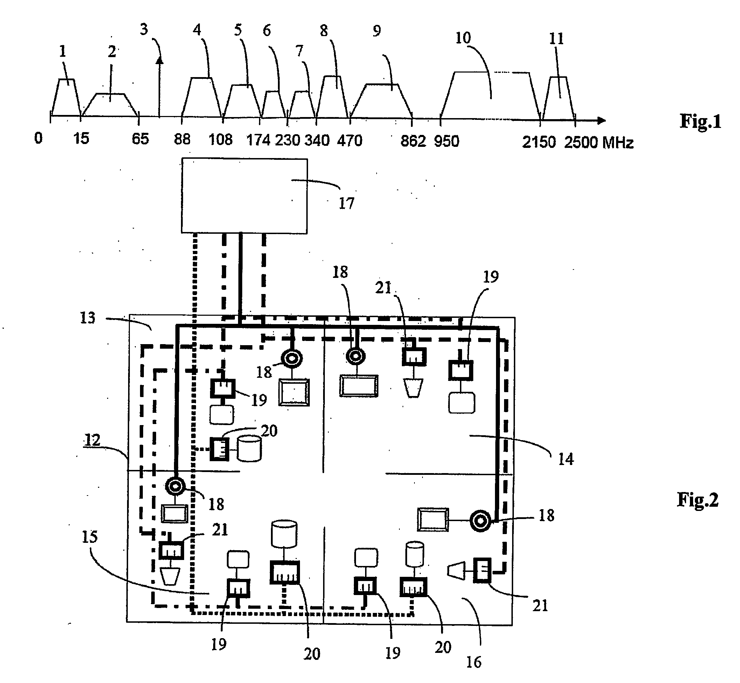

Fig. 1 shows a typical spectral distribution, or frequency allocation, of said signals in their original form, i.e. in the form in which they are made available by the various service providers and broadcasters and so received, for example, by the central unit of a centralized system, without therefore. -being subjected to demodulation, re-modulation operations in a different standard, and frequency translation, in short without undergoing any transmodulation.
■ Reference number 1 indicates the spectrum occupied by a typical video intercom signal, ranging from 0 to 15 MHz; said video intercom signal includes the video intercom DC supply, the controls, the voice and the video signal.
■ Reference number 2 indicates the spectrum occupied by upstream data signals, in particular CDM (Cable Data Modem) signals, VoIP (Voice on IP) signals and generic data signals such as the Ethernet network.
■ Reference number 3 indicates a possible control signal.
■ Reference number 4 indicates the spectrum occupied by the radio FM signal.
■ Reference number 5 indicates the spectrum occupied by QAM modulated television signals for cable digital television or by CATV analog channels S2...S10.
■ Reference number 6 shows the spectrum occupied by the analog and digital television signal in band III.
■ Reference number 7 indicates the spectrum occupied by multimedia data being modulated, for example, in QAM and/or analog CATV.
■ Reference number 8 indicates the spectrum occupied by other signals being modulated in digital TV QAM and/or analog CATV.
■ Reference number 9 indicates the UHF spectrum occupied by COFDM modulated terrestrial analog and/or digital television signals.
■ Reference number 10 indicates the spectrum occupied by analog and/or digital TV signals being broadcast via satellite.
■ Reference number 11 indicates the spectrum occupied by the wireless communication system, known as WiFi.

The above-described signals are received, e.g. in a premises, through cables and antennas, and are then distributed by the centralized system to every user's apartment and/or office.

According to the known art, the distribution of the above signals usually takes place as indicated in Fig. 2, which shows a schematic example of an apartment, indicated with the number 12, being located in a premises and including 4 rooms, indicated with the numbers 13, 14, 15 and 16. Typically, the premises is fitted with a signal distribution central unit, indicated with the number 17 in Fig. 2, which is supposed to distribute, for example, the analog and/or digital terrestrial and/or cable television signals, the telephone signal, the video intercom signal, and the CDM service network to the above apartment.

The distribution cables are represented by means of a continuous line (coaxial cable) for television and CDM signals, a dashed line (UTP or twisted pair cable) for the telephone cable and V90 or V32 modem connections, a dashed-dotted line (typically twisted pair cables) for the video intercom, and a dotted line (FTP cable) for data signals. Undoubtedly, each cable must reach the room where the associated service is used, and the signal is picked up through a socket being associated with the requested signal; with reference to Fig. 2, all four signals reach the rooms indicated with reference numbers 15 and 16, wherein the television signal is picked up through a IEC socket indicated with reference number 18, the video intercom signal is picked up through an RJ11 socket indicated with reference number 19, the data signal is picked up through an RJ45 socket indicated with reference number 20, and the telephone signal is picked up through an RJ11 socket indicated with reference number 21. The room number 13 is reached by the television signal through the socket 18, the video intercom signal through the socket 19, and the data signal through the socket 20, whereas the room number 14 is reached by the telephone signal through the socket 21, the video intercom signal through the socket 19 and the television signal through the socket 18. As clearly illustrated, the apartment is run across by a large number of cables being technically different from one another (LJTP, FTP, duplex, coaxial, etc.) according to the transported signal, and this, besides making the installation work more complex, may cause aesthetical and practical problems if, for instance, the apartment is not fitted with suitable cable troughs for laying the cables.

In order to reduce the number of cables, and at the same time to facilitate the connection of new services without the user incurring in additional costs, it has been surprisingly verified that it is possible to provide a system for the distribution of signals to a plurality of users, wherein said system receives signals having different modulation and frequency allocation, and wherein each user is reached by a single coaxial cable on which said signals are available with the same modulation and frequency allocation as those with which they have been received.

So far, the transmission on a single coaxial cable of a high number of signals having different nature, i.e. different modulation and frequency allocation, has always been considered as an unfeasible solution due to saturation problems suffered by the system amplifying stages which, depending on the amplitude and frequency allocation of the received signal, may generate harmonics being capable of disturbing the transmission.

It is for this reason that some known solutions allowing to use a single typology of cables required that the signals be transmodulated.

Further intricacies, e.g. associated with the overlapping between the band of the video intercom signal and that of the telephone signal, have contributed de facto to create a technical prejudice against the possibility of implementing a distribution system wherein all signals are distributed through a single cable without losing their original modulation and frequency allocation.

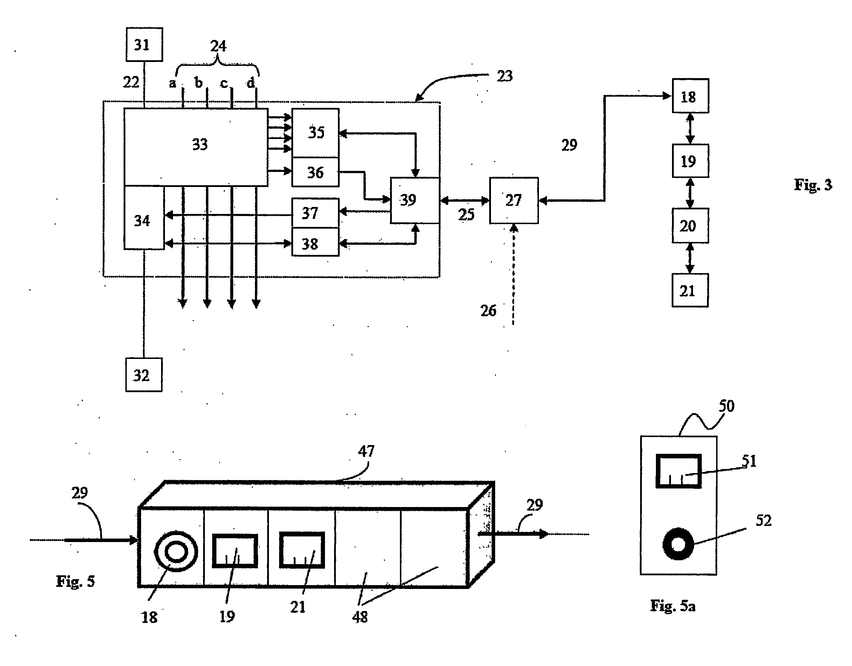

As a matter of fact, the system according to the invention, described in the form of a preferred embodiment in Fig. 3, allows to overcome said technical prejudice and to provide a user with a plurality of signals having different modulation and frequency allocation through a single cable.

With reference to Fig. 3, the distribution system according to the invention comprises a central unit 31 adapted to receive non-satellite signals and to transmit them over a backbone cable, indicated with reference number 22, keeping the same modulation and frequency allocation. For this purpose, the central unit is adapted to perform filtering and equalization functions on the received signals, so as to avoid the generation of harmonics which may disturb the transmission.

The backbone cable 22 is preferably a coaxial cable, since this cable typology has a very wide passband, allowing the transmission of signals having a frequency up to 2.5 GHz or even higher.

The system also comprises at least one shunt adapted to receive first non-satellite signals through at least one backbone cable 22; given the present tendency to install satellite systems in premises, said shunt is, according to a preferred embodiment, also adapted to receive second satellite signals through second cables 24, indicated with a,b,c,d.

In Fig. 3, the shunt picks up the signals from the backbone cable 22 through an appropriate decoupling and it possibly amplifies and/or equalizes them. The shunt is reached separately by the satellite signals indicated with reference numbers 24 a,b,c,d, which represent, for example, the signals of the four output bands of the Low Noise Block of the satellite reception system, i.e. high band and low band, horizontal polarization and vertical polarization. The satellite signal, being comprised, as said, within the frequency range from 950 MHz to 2150 MHz and being selected as described later, is routed together with the other signals over the shunt output coaxial cable 25.

In the embodiment of Fig. 3, the system uses a single satellite system, i.e. a single parabolic antenna and a single LNB from which 4 cables depart, carrying the same number of satellite signals; it is however possible, with some small modifications to the shunt, to conceive a system comprising two or more parabolic antennas pointed at different satellites, with a consequent increase of the number of cables 24.

Fig. 3 also shows the functional blocks of the shunt 23 according to the invention. The shunt 23 comprises a first extractor 33 adapted to pick up the non-satellite signals and the satellite signals from the respective cables, i.e. the backbone cable 22 and the cables 24 a,b,c,d.

For this purpose, said extractor 33 comprises a plurality of filters, amplifiers and shunts.

The shunt 23 also comprises a selection circuit 35, being controlled by the user through a set-top box and adapted to select one of the satellite signals extracted through said first extractor 33. The block 36 is used for a possible conditioning of the television and data signal (filtering, amplification, attenuation) directed to the user.

Still with reference to Fig. 3, the shunt comprises a second extractor 34 adapted to extract a video intercom signal from the backbone cable 22. The necessity of a second extractor being dedicated to the video intercom signal derives from the fact that said signal can be transmitted on said backbone cable both from the central unit 31 and from an external location of the video intercom system 32 being connected to the same backbone cable 22. As shown in Fig. 3, the central unit 31 and the external location of the video intercom system 32 are placed at two opposite ends of the backbone cable 22; in order to prevent the generation of noise due to return of the video intercom signal transmitted from the external location of the video intercom system, the central unit comprises means adapted to terminate said video intercom signal.

Furthermore, in view of the necessity of sending control signals to the external location of the video intercom system, and at the same time to send data through the backbone cable 22, said second extractor 34 is also adapted to perform the above-mentioned signal routing functions over the backbone cable.

The conditioning of the data return signals (possible filtering, amplification, attenuation) for their transmission over the cable 22 through said second extractor 34 takes place in the block 37, whereas the conditioning of the video intercom signal (possible filtering, amplification, attenuation) takes place in the block 38.

The output block of the shunt 23 is an adder circuit 39 adapted to put on a single output cable 25 both the satellite signal selected through the selection circuit 35 and the non-satellite signals extracted through said first extractor 33, as well as the video intercom signal extracted by said second extractor 34.

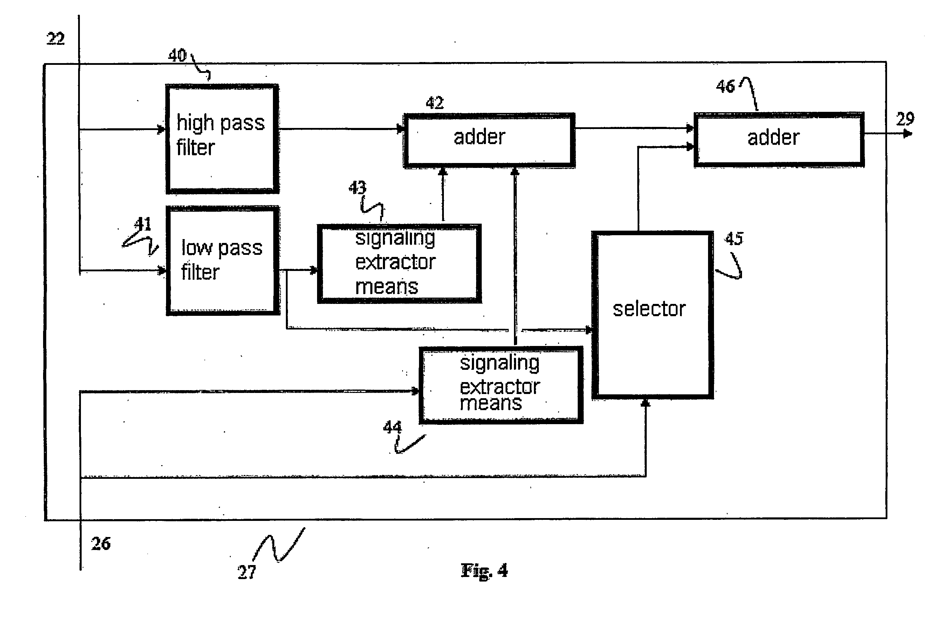

The system according to the invention may also comprise a further element, indicated with reference number 27, which receives, besides the above coaxial cable 25, also the telephone line indicated with reference number 26; the functions of the circuit 27 are detailed in Fig. 4.

Since the telephone signal and the video intercom signal share the initial portion of the frequency spectrum, i.e. that occupied by the voice of the video intercom signal, these two signals cannot be routed simultaneously over the same coaxial cable, and therefore either signal must, for example, be kept waiting while the user is using the other signal. The element 27 is actually a module for switching between the video intercom voice signal and the telephone signal.

For this purpose, the switching module 27 comprises:
- first filtering means 41, in particular a low-pass filter, adapted to extract the voice of the video intercom signal being present on said output cable 25 of said shunt 23 and for supplying it to one of its outputs,
- second filtering means 40, in particular a high-pass filter, adapted to extract the non-voice signals, i.e. other than the video intercom voice, being present on said output cable 25 of said shunt 23, and to supply them to one of its outputs,
- first extractor means 43 being connected to the output of said first filtering means 41 and adapted to select the control signals of said video intercom signal and to supply them to an output,
- second extractor means 44, adapted to select the control signals, which in telephone jargon are called "signaling", of said telephone signal and to supply them to an output,
- a first adder circuit 42 being connected to the output of said second filtering means 40 and to said first and second extractor means, and adapted to add up said non-video intercom signals and said control signals,
- a selection circuit 45 being connected to the output of said first filtering means 41 and said telephone line in order to receive said video intercom signal and said telephone signal,
- a second adder circuit 46 adapted to add up output signals of said first adder circuit 42 and output signals of said selection circuit 45, as well as to supply them to an output.

Since the telephone signal over the twisted pair cable is balanced to ground, in order to be able to carry it over the coaxial cable 29 it is necessary to unbalance it, e.g. through a circuitry being known as balun, not shown in the illustration.

In short, by controlling the selector 45 through a known technique, a user may choose whether to receive the voice signal of the video intercom or that of the telephone over the shielded cable 29, besides the various multimedia signals, among which the video intercom video signal and the video intercom and telephone control signals. The telephone line may be switched, for example, when a user lifts the telephone handset.

The cable 29, departing from the switching module 27, is brought to the rooms where the signals are to be used; within the user's house or office, the signals may be distributed on a single cable 29 crossing each room according to a bus configuration, as in the example of Fig. 3, or through a plurality of cables according to a star configuration, having its star center at the output of the switching module 27. Of course, distributions according to a mixed bus-star configuration are possible as well.

The user can utilize the requested signals by connecting the above cables to suitable sockets being appropriately decoupled and insulated. Supposing that, for instance, as shown in Fig. 1 and 2, a room is to be provided with the video intercom signal, the television signal and the data signal, the shielded cable 29 will have to be connected to the socket with reference number 19 for the video intercom, to the IEC socket with reference number 18 for the television signal, and to the RJ45 socket with reference number 20 for the data signal.

In conclusion, each service point is defined by the type of socket used for picking up the signal, not by the cable carrying the signal.

In order to provide a previously wired room with a new service, e.g. satellite television, it will be no longer necessary to add new cables; instead, it will be sufficient to connect the appropriate socket F to the cable 29 and to connect the Set Top Box (STB) to said socket. In order to choose the desired satellite channel among the four being available, it is necessary to send to the shunt 23, through the STB, a signal complying with the DiseqC standard which, as known, is composed of a 14V or 18V direct voltage and a 22kHz sinusoidal wave; however, this type of signal is not compatible with a system wherein the video intercom is to be supplied remotely, e.g. with a 24V direct voltage; this is why the socket F, to which the set-top box is connected, must be suitably decoupled in direct voltage from the coaxial cable 29; thus, only the 22kHz tone transmitted by the set-top box will be received by the shunt and interpreted by the selection circuit 35. Since in DiseqC V 1.0 and subsequent versions all information is contained in the 22kHz tone, this measure in the construction of the socket F allows to control the shunt and to select the satellite signal among the four coming from the LNB of the satellite system.

Comparing Fig. 2 with Fig. 3, the advantages of the invention become apparent: the distribution of the signals is obtained by using a single cable typology (coaxial cable) and the addition of new services is much easier, without the necessity of manipulating the signals to be distributed by means of expensive transmodulators.

It is clear that many changes may be made to the system being the object of the present invention. For example, instead of being installed individually, the sockets for picking up the signal may be realized in modular form and be contained in suitable blocks; various sockets may then be inserted into a block from time to time according to the user's requirements. Fig. 5 shows an example of a multiple socket adapted to be connected to a single coaxial cable, and comprising at least two modules for picking up different signals from said cable, said modules being connected to each other in parallel. According to an advantageous embodiment, the socket is a modular one and consists of a block in which different modules for picking up different signals may be inserted. In the example of Fig. 5, the block 47 contains 5 modules, three of which are occupied by a television socket 18, a video door phone socket 19 and a telephone socket 21, respectively; the remaining 2 modules, indicated with reference number 48, are available for adding other sockets in the future according to the users' requirements.

The above-described multiple socket offers high flexibility. Let us for example consider the case of the transmission of CDM signals: normally this takes place by connecting an equipment fitted with a CDM modem to the associated socket F. Said socket is a passive device which performs a filtering in order to pick up signals in the band 2 of Fig. 1.

According to the invention, it is possible to conceive modules being active devices and which perform the functions of a CDM modem; the module will thus have a female RJ45 or USB connector to which a normal PC may be connected.

However, since this type of module is an active device, it must be powered. The power supply may be provided in two ways: either by directly using a USB connector, thereby taking power directly from the PC, or by providing inside the module 50, as shown in Fig. 5a, both an RJ45 connector 51 and a jack connector 52 to which a transformer supplied by the normal domestic network may be connected.

By means of this type of module, which in practice connects the data network to the electric network, it is possible, by connecting a control device, e.g. a PC, to the socket, to carry out a conveyed wave control of appliances being supplied through the electric network.

Furthermore, according to another advantageous embodiment, the central unit 31 is adapted to receive and distribute WiFi-type radiofrequency signals by means of the backbone cable 22. In other words, the central unit 31 may be fitted with an electronic board allowing it to perform the functions of an Access Point for a wireless local area network, in particular being of the WiFi type according to the IEEE 802.11 WiFi standards, but in order to grant access to mobile terminals, e.g. notebooks, being distributed in the various users' rooms, according to the invention it is possible to exploit the described distribution system by adding, among the various sockets being available to the user, also a passive transceiver adapted to receive and transmit WiFi-type signals.

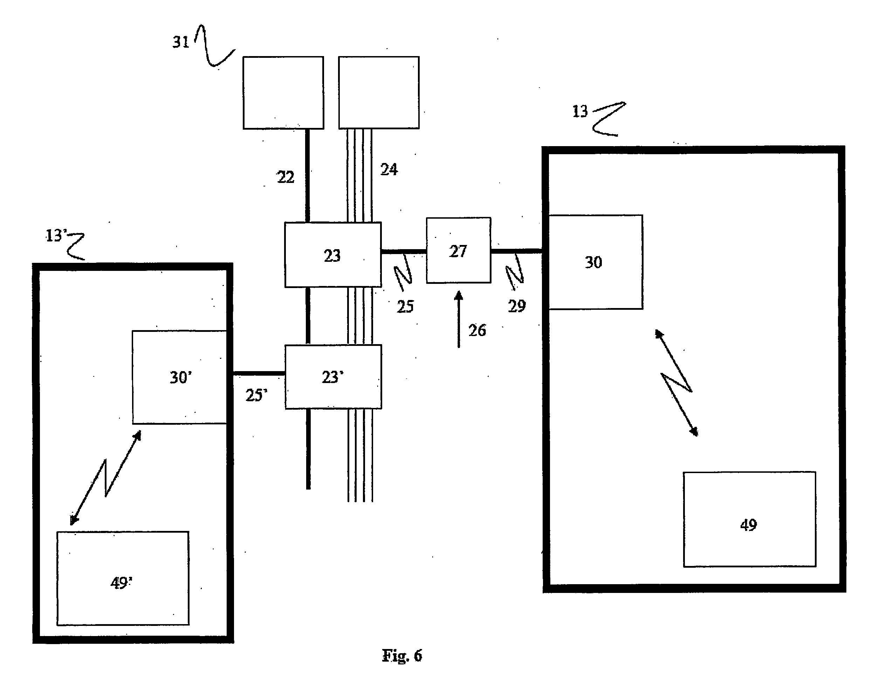

The system comprising the WiFi service distribution is illustrated in Fig. 6, showing two rooms 13 and 13' of two different apartments; the rooms are provided with the sockets 30 and 30', respectively, which in practice coincide with an antenna being suitably coupled to the coaxial cable 29 through a balun, for the WiFi signal.

The mobile terminals 49 and 49' communicate through radio waves with the respective sockets 30 and 30', and then the data is transmitted via cable to the access point, i.e. the central unit 31.

Still with reference to Fig. 6, a further embodiment of the system according to the invention is as follows: in some cases, e.g. room 13', the telephone cable may be brought to the user in the conventional way, not shown in Fig. 6, so that the switching module 27 is no longer needed and the cable 25' coming out of the shunt 23' is brought directly to the user.

Although less advantageous than the previous one, this solution however represents a possible embodiment, just as it is possible to send the four intermediate-frequency satellite signals (horizontal polarization, vertical polarization, high band and low band) output by the LNB of the satellite system directly to the central unit 31 and from there to set a predefined channel selection. In this case, the central unit 31 must comprise a satellite module adapted to receive intermediate-frequency satellite signals from the LNB of the satellite system of the premises and to perform a selection of the channels to be transmitted over the backbone cable 22 together with the other non-satellite signals. The selection of the satellite channels through DiseqC commands is no longer necessary, and the shunt 23 may be simplified by removing the block 35.

## Claims

1. System for the distribution of signals to a plurality of sockets (18,19,20,21) of a premises, comprising:
- a central unit (31) for receiving TV signals (2-11) and for transmitting said TV signals on one or more backbone cables (22, 24a-24d) with the same modulation and frequency allocation as those with which they have been received,
- a shunt (23), operatively connected to said one or more backbone cables (22, 24a-24d) and comprising first extracting means (33) for picking up said TV signals from said one or more backbone cables (22, 24a-24d) and an output block (39) for transmitting the picked up TV signals to first sockets (18) being operatively connected to said shunt
said system being **characterized:**
- **by** further comprising generating means (32) for generating a video intercom signal comprising at least a DC supply for user equipments connected to second sockets (19), said generating means (32) being adapted for transmitting said video intercom signal (1) on a first (22) of said one or more backbone cables (22, 24a-24d),
- by comprising second extracting means (34) for picking up said video intercom signal (1) from said first backbone cable (22) and in that said output block (39) is adapted for distributing said picked up TV signals (2-11) and said picked up video intercom signal (1) on a single output cable (25) of said shunt; and
- in that said system comprises a switching module (27) adapted to receive the signals being present on said output cable (25) of said shunt (23) and a telephone signal being present on a telephone line (26), said switching module (27) comprising:
- means for filtering (40,41) the signals being present on said first output cable (25) of said shunt so as to extract a voice signal of the video intercom signal and second signals different from said voice signal of the video intercom signal,
- means for selecting (45) one signal between said telephone signal and said voice signal, and
- means (46) for adding-up to an output cable (29) of said switching module (27) said second signal and the selected signal, said output cable (29) feeding said first (18) and/or second (19) sockets.

2. System according to claim 1, wherein
said means for filtering comprises:
- first filtering means (41), in particular a low-pass filter, adapted to extract the voice of the video intercom signal being present on said output cable (25,29) of said shunt (23) and to supply it to one of its outputs,
- second filtering means (40), in particular a high-pass filter, adapted to extract said second signals being present on said output cable (25,29) of said shunt (23) and to supply them to one of its outputs,
- first extracting means (43) being connected to the output of said first filtering means (41) and adapted to select the control signals of said video intercom signal and to supply them to an output,
- second extracting means (44), adapted to select the control signals of said telephone signal and to supply them to an output,
said means for selecting comprises:
- a selection circuit (45) being connected to the output of said first filtering means (41) and said telephone line in order to receive at the input said video intercom signal and said telephone signal,
said means for add-up comprises:
- a first adder circuit (42) being connected to the output of said second filtering means (40) and to said first and second extracting means (43,44), and adapted to add up said second signals and said control signals,
- a second adder circuit (46) adapted to add up output signals of said first adder circuit (42) and output signals of said selection circuit (45), as well as to supply them to said output cable (29) of said switching module (27).

3. System according to claim 1 or 2, wherein said TV signals comprise satellite and non satellite signals and wherein said shunt is adapted to receive said non-satellite signals and said satellite signals over different backbone cables (22, 24a-24d).

4. System according to claim 3, **characterized in that** said central unit (31) is adapted to receive said video intercom signal and to transmit it over said one or more backbone cables, keeping the same modulation and frequency allocation.

5. System according to claim 4, **characterized in that** said central unit is adapted to perform filtering and equalization functions of the received signals.

6. System according to one of claims 2 to 5, **characterized in that** said shunt (23) is adapted to add up the received signals and to route them over a single output cable (25) of said shunt.

7. System according to one of claims 3-6, **characterized in that** said shunt comprises a selection circuit (35) being connected to said first extracting means (33) and adapted to select one of the satellite signals extracted by said first extracting means (33).

8. System according to claim 7, **characterized in that** said selection circuit 35 is controlled by the user through a set-top box.

9. System according to one of the previous claim, **characterized in that** said generating means comprise an external location of a video intercom system (32) adapted to generate and transmit a video intercom signal.

10. System according to claim 9, **characterized in that** said central unit and said external location of the video intercom system (32) are located at two opposite ends of said first backbone cable (22), and **in that** said central unit comprises means adapted to terminate said video intercom signal transmitted from said external location of the video intercom system.

11. System according to claim 10, **characterized in that** said second extracting means (34) is adapted to route return commands from a video intercom of said video intercom system over said first backbone cable.

12. System according to one of claims 3 to 11, **characterized in that** said shunt comprises an adder circuit (39) adapted to route over a single output cable (25,29) of said shunt (23) said satellite signals selected through said selection circuit, said first non-satellite signals extracted through said first extracting means, and said video intercom signal extracted through said second extracting means.

13. System according to one of the previous claims, **characterized in that** said signal sockets (18,19,20,21) are adapted on the one hand to the type of distribution cable, and on the other hand to the transmission protocol of the signal which can be picked-up through said signal sockets.

14. System according to claim 13, **characterized in that** said central unit is adapted to perform the functions of an Access Point for wireless local area networks, in particular being of the WiFi type.

15. System according to claim 14, **characterized in that** said central unit is adapted to receive WiFi-type radiofrequency signals through said backbone cable 22.

16. System according to claim 14, **characterized in that** some of said first sockets comprise a passive transceiver adapted to receive and transmit WiFi-type signals.

17. System according to one of claims 1-16, wherein said first and/or second sockets are decoupled and insulated.

18. Method for the distribution of signals to a plurality of sockets (18,19,20,21) of a premises, comprising the steps of:
- receiving TV signals (2-11)
- transmitting said TV signals on one or more backbone cables (22, 24a-24d) with the same modulation and frequency allocation as those with which they have been received,
- receiving the TV signals transmitted over said backbone cable at first sockets (18) operatively connected to said one or more backbone cables,
**characterized by** the step 1 of:
- transmitting on said one or more backbone cables (22, 24a-24d) a video intercom signal (1) comprising at least a DC supply for user equipments connected to second sockets (19) operatively connected to said one or more backbone cables;
- picking up said TV signals and said video intercom signal from said one or more backbone cable and distributing them on a single cable (25,29) feeding said first (18) and/or second (19) sockets,
- receiving a telephone signal, comprising a relative voice signal, over a telephone line (26),
- distributing on said single cable (29) one of the voice signal of the video intercom signal and the voice signal of the telephone signal.

19. Method according to claim 18 wherein said TV signals and said video intercom signal are input at two ends of the same backbone cable.

20. Method according to claim 18 or 19 wherein the voice signal of the telephone signal is distributed by lifting the telephone handset.

21. System for carrying out the method according to one of claims 18-20.

## Patentansprüche

1. System zur Verteilung von Signalen an eine Mehrzahl von Anschlüssen (18, 19, 20, 21) eines Gebäudes, umfassend:
- eine Zentraleinheit (31) zum Empfangen von Fernsehsignalen (2 bis 11) und zum Übertragen der Fernsehsignale auf einem oder mehreren Backbone-Kabeln (22, 24a bis 24d) mit derselben Modulation und Frequenzzuteilung wie jene, mit denen sie empfangen wurden,
- einen Shunt (23), wirksam mit dem einen oder den mehreren Backbone-Kabeln (22, 24a bis 24d) verbunden und umfassend erste Extraktionsmittel (33) zum Aufnehmen der Fernsehsignale von dem einen oder den mehreren Backbone-Kabeln (22, 24a bis 24d) und einen Ausgabeblock (39) zum Übertragen der aufgenommenen Fernsehsignale an erste Anschlüsse (18), die wirksam mit dem Shunt (23) verbunden sind,
wobei das System **dadurch** charakterisiert ist:
- dass es ferner Erzeugungsmittel (32) zum Erzeugen eines Videogegensprechanlagensignals umfasst, umfassend zumindest eine Gleichstromversorgung für Bedienerausrüstungen, die mit zweiten Anschlüssen (19) verbunden sind, wobei die Erzeugungsmittel (32) angepasst sind zum Übertragen des Videogegensprechanlagensignals (1) auf einem ersten (22) des einen oder der mehreren Backbone-Kabel (22, 24a bis 24d),
- dass es zweite Extraktionsmittel (34) zum Aufnehmen des Videogegensprechanlagensignals (1) vom ersten Backbonekabel (22) umfasst und dass der Ausgabeblock (39) angepasst ist zum Verteilen des aufgenommenen Fernsehsignals (2 bis 11) und des aufgenommenen Videogegensprechanlagensignals (1) auf einem einzelnen Ausgabekabel (25) des Shunt; und
- dass das System ein Schaltmodul (27) umfasst, das angepasst ist, um die Signale, die auf dem Ausgabekabel (25) des Shunt (23) vorliegen, und ein Telephonsignal, das auf einer Telephonleitung (26) vorliegt, zu empfangen, wobei das Schaltmodul (27) umfasst:
- Mittel zum Filtern (40, 41) der Signale, die auf dem ersten Ausgabekabel (25) des Shunt vorliegen, um ein Stimmensignal des Videogegensprechanlagensignals und zweite Signale, die vom Stimmensignal des Videogegensprechanlagensignals verschieden sind, zu extrahieren,
- Mittel zum Auswählen (45) eines Signals unter dem Telephonsignal und dem Stimmensignal, und
- Mittel (46) zum Aufaddieren an ein Ausgabekabel (29) des Schaltmoduls (27) des zweiten Signals und des ausgewählten Signals, wobei das Ausgabekabel (29) die ersten (18) und/oder zweiten (19) Anschlüsse speist.

2. System nach Anspruch 1, bei welchem die Mittel zum Filtern umfassen:
- erste Filtermittel (41), insbesondere ein Tiefpassfilter, angepasst, um die Stimme des Videogegensprechanlagensignals, die auf dem Ausgabekabel (25, 29) des Shunt (23) vorliegt, zu extrahieren und sie an eine seiner Ausgaben zu liefern,
- zweite Filtermittel (40), insbesondere ein Hochpassfilter, angepasst, um die zweiten Signale, die auf dem Ausgabekabel (25, 29) des Shunt (23) vorliegen, zu extrahieren und diese an eine seiner Ausgaben zu liefern,
- erste Extraktionsmittel (43), die mit der Ausgabe der ersten Filtermittel (41) verbunden sind und angepasst sind, um die Steuersignale des Videogegensprechanlagensignals auszuwählen und diese an eine Ausgabe zu liefern,
- zweite Extraktionsmittel (44), angepasst, um die Steuersignale des Telephonsignals auszuwählen und diese an eine Ausgabe zu liefern,
wobei die Mittel zum Auswählen umfassen:
- eine Selektionsschaltung (45), die mit der Ausgabe der ersten Filtermittel (41) und der Telephonleitung verbunden ist, um beim Eingang das Videogegensprechanlagensignal und das Telephonsignal zu empfangen,
wobei die Mittel zum Aufaddieren umfassen:
- eine erste Additionsschaltung (42), die mit der Ausgabe der zweiten Filtermittel (40) und mit den ersten und zweiten Extraktionsmitteln (43, 44) verbunden ist, und angepasst ist, um die zweiten Signale und die Steuersignale aufzuaddieren,
- eine zweite Additionsschaltung (46), die angepasst ist, um Ausgabesignale der ersten Additionsschaltung (42) und Ausgabesignale der Selektionsschaltung (45) aufzuaddieren, sowie um diese an das Ausgabekabel (29) des Schaltmoduls (27) zu liefern.

3. System nach Anspruch 1 oder 2, bei welchem die Fernsehsignale Satelliten- und Nichtsatellitensignale umfassen, und wobei der Shunt angepasst ist, um die Nichtsatellitensignale und die Satellitensignale über verschiedene Backbone-Kabel (22, 24a bis 24d) zu empfangen.

4. System nach Anspruch 3, **dadurch gekennzeichnet, dass** die Zentraleinheit (31) angepasst ist, um das Videogegensprechanlagensignal zu empfangen und es über das eine oder die mehreren Backbone-Kabel zu übertragen, wobei dieselbe Modulation und Frequenzzuteilung beibehalten wird.

5. System nach Anspruch 4, **dadurch gekennzeichnet, dass** die Zentraleinheit angepasst ist, um Filter- und Ausgleichsfunktionen der empfangenen Signale durchzuführen.

6. System nach einem der Ansprüche 2 bis 5, **dadurch gekennzeichnet, dass** der Shunt (23) angepasst ist, um die empfangenen Signale aufzuaddieren und sie über ein einzelnes Ausgabekabel (25) des Shunt zu leiten.

7. System nach einem der Ansprüche 3 bis 6, **dadurch gekennzeichnet, dass** der Shunt eine Selektionsschaltung (35) umfasst, die mit den ersten Extraktionsmitteln (33) verbunden ist und angepasst ist, um eines der von den ersten Extraktionsmitteln (33) extrahierten Satellitensignale auszuwählen.

8. System nach Anspruch 7, **dadurch gekennzeichnet, dass** die Selektionsschaltung (35) durch den Bediener über eine Set-Top-Box gesteuert wird.

9. System nach einem der vorherigen Ansprüche, **dadurch gekennzeichnet, dass** die Erzeugungsmittel einen externen Ort eines Videogegensprechanlagensystems (32) umfassen, angepasst, um ein Videogegensprechanlagensignal zu erzeugen und zu übertragen.

10. System nach Anspruch 9, **dadurch gekennzeichnet, dass** die Zentraleinheit und der externe Ort des Videogegensprechanlagensystems (32) an zwei entgegengesetzten Enden des ersten Backbone-Kabels (22) angeordnet sind, und dass die Zentraleinheit Mittel umfasst, die angepasst sind, um das vom externen Ort des Videogegensprechanlagensystems übertragene Videogegensprechanlagensignal zu beenden.

11. System nach Anspruch 10, **dadurch gekennzeichnet, dass** die zweiten Extraktionsmittel (34) angepasst sind, um Rückbefehle von einer Videogegensprechanlage des Videogegensprechanlagensystems über das erste Backbone-Kabel zu leiten.

12. System nach einem der Ansprüche 3 bis 11, **dadurch gekennzeichnet, dass** der Shunt eine Additionsschaltung (39) umfasst, die angepasst ist, um über ein einzelnes Ausgabekabel (25, 29) des Shunt (23) die Satellitensignale, die durch die Selektionsschaltung ausgewählt wurden, die ersten Nichtsatellitensignale, die durch die ersten Extraktionsmittel extrahiert wurden, sowie das Videogegensprechanlagensignal, das durch die zweiten Extraktionsmittel extrahiert wurde, zu leiten.

13. System nach einem der vorherigen Ansprüche, **dadurch gekennzeichnet, dass** die Signalanschlüsse (18, 19, 20, 21) angepasst sind einerseits an die Art des Verteilungskabels und andererseits an das Übertragungsprotokoll des Signals, das durch die Signalanschlüsse aufgenommen werden kann.

14. System nach Anspruch 13, **dadurch gekennzeichnet, dass** die Zentraleinheit angepasst ist, um die Funktionen eines Zugangspunkts für drahtlose Lokalnetze insbesondere vom Wi-Fi-Typ durchzuführen.

15. System nach Anspruch 14, **dadurch gekennzeichnet, dass** die Zentraleinheit angepasst ist, um Radiofrequenzsignale vom Wi-Fi-Typ durch das Backbone-Kabel (22) zu empfangen.

16. System nach Anspruch 14, **dadurch gekennzeichnet, dass** manche der ersten Anschlüsse einen passiven Transceiver umfassen, der angepasst ist, um Signale vom Wi-Fi-Typ zu empfangen und zu übertragen.

17. System nach einem der Ansprüche 1 bis 16, bei welchem die ersten und/oder zweiten Anschlüsse entkoppelt und isoliert sind.

18. Verfahren zur Verteilung von Signalen an eine Mehrzahl von Anschlüssen (18, 19, 20, 21) eines Gebäudes, umfassend die Schritte:
- Empfangen von Fernsehsignalen (2 bis 11)
- Übertragen der Fernsehsignale auf einem oder mehreren Backbone-Kabeln (22, 24a bis 24d) mit derselben Modulation und Frequenzzuteilung wie jene, mit denen sie empfangen wurden,
- Empfangen der über das Backbone-Kabel übertragenen Fernsehsignale bei ersten Anschlüssen (18), die wirksam mit dem einen oder den mehreren Backbone-Kabeln verbunden sind,
**gekennzeichnet durch** die Schritte:
- Übertragen auf dem einen oder den mehreren Backbone-Kabeln (22, 24a bis 24d) eines Videogegensprechanlagensignals (1), umfassend zumindest eine Gleichstromversorgung für Benutzerausrüstungen, die mit zweiten Anschlüssen (19) verbunden sind, die wirksam mit dem einen oder den mehreren Backbone-Kabeln verbunden sind;
- Aufnehmen der Fernsehsignale und des Videogegensprechanlagensignals von dem einen oder den mehreren Backbone-Kabeln und Verteilen dieser auf einem einzelnen Kabel (25, 29), das die ersten (18) und/oder zweiten (19) Anschlüsse speist,
- Empfangen eines Telephonsignals, umfassend ein relatives Stimmsignal, über eine Telephonleitung (26),
- Verteilen auf dem einzelnen Kabel (29) eines unter dem Stimmensignal des Videogegensprechanlagensignals und dem Stimmensignal des Telephonsignals.

19. Verfahren nach Anspruch 18, bei welchem die Fernsehsignale und das Videogegensprechanlagensignal an zwei Enden desselben Backbone-Kabels eingegeben werden.

20. Verfahren nach Anspruch 18 oder 19, bei welchem das Stimmensignal des Telephonsignals verteilt wird durch Abheben des Telephonhörers.

21. System zum Ausführen des Verfahrens gemäß einem der Ansprüche 18 bis 20.

## Revendications

1. Système pour la distribution de signaux à une pluralité de modules (18, 19, 20, 21) d'un local, comprenant :
- une unité centrale (31) pour la réception de signaux TV (2-11) et pour la transmission desdits signaux TV sur un ou plusieurs câbles verticaux (22, 24a-24d) avec la même modulation et attribution de fréquences que celles avec lesquelles ils ont été reçus,
- un shunt (23) connecté de façon fonctionnelle audit un ou auxdits plusieurs câbles verticaux (22, 24a-24d) et comprenant un premier moyen d'extraction (33) pour capter lesdits signaux TV provenant dudit un ou desdits plusieurs câbles verticaux (22, 24a - 24d), et un bloc de sortie (39) pour transmettre les signaux TV captés aux premiers modules (18) qui sont connectés de façon fonctionnelle audit shunt (23),
ledit système étant **caractérisé par le fait :**
- **qu'**il comprend de plus un moyen de génération (32) pour générer un signal d'intercommunication vidéo comprenant au moins une alimentation continue pour des équipements utilisateur connectés aux seconds modules (19), ledit moyen de génération (32) étant adapté pour transmettre ledit signal d'intercommunication vidéo (1) sur un premier (22) dudit un ou desdits plusieurs câbles verticaux (22, 24a-24d)
- **qu'**il comprend un second moyen d'extraction (34) pour capter ledit signal d'intercommunication vidéo (1) provenant dudit premier câble vertical (22), et en ce que ledit bloc de sortie (39) est adapté pour distribuer lesdits signaux TV captés (2-11) et ledit signai d'intercommunication vidéo capté (1) sur un unique câble de sortie (25) shunt et
- **que** ledit système comprend, un module de commutation (27) adapté pour recevoir les signaux présents sur ledit câble de sortie (25) dudit shunt (23), et un signal téléphonique présent sur une ligne téléphonique (26), ledit module de commutation (27) comprenant :
- un moyen de filtrage (40, 41), les signaux étant présents sur ledit premier câble de sortie (25) dudit shunt, y de façon à extraire un signal vocal du signal d'intercommunication vidéo et des seconds signaux différents dudit signal vocal du signal d'intercommunication vidéo,
- un moyen de sélection (45) d'un signal entre ledit signal téléphonique et ledit signal vocal, et
- un moyen (46) d'addition, à un câble de sortie (29) dudit module de commutation (27), dudit second signal et du signal sélectionnée ledit câble de sortie (29) alimentant lesdits premiers (18) et/ou seconds (19) modules.

2. Système selon la revendication 1, dans lequel ledit moyen de filtrage comprend :
- un premier moyen de filtrage (41), en particulier un filtre passe-bas, adapté pour extraire la voix du signal d'intercommunication vidéo présent sur ledit câble de sortie (25, 29) dudit shunt (23) et pour la fournir à une de ses sorties,
- un second moyen de filtrage (40), en particulier un filtre passe-haut, adapté pour extraire lesdits seconds signaux présents sur ledit: câble de sortie (25, 29) audit shunt (23) et pour les fournir à une de leurs sorties
- un premier moyen d'extraction (43) étant connecté à la sortie desdits premiers moyens de filtrage (41) et adapté pour sélectionner les signaux de commande dudit signal d'intercommunication vidéo et pour les fournir à une sortie,
- un second moyen d'extraction (44), adapté pour sélectionner les signaux de commande dudit signal téléphonique et pour les fournir à une sortie,
ledit moyen de sélection comprend :
- un circuit de sélection. (45) connecté à la sortie dudit premier moyen de filtrage (41) et de ladite ligne téléphonique afin de recevoir à l'entrée ledit signal d' intercommunication vidéo et ledit signal téléphonique, ledit moyen d'addition comprend :
- un premier circuit additionneur (42) connecté à la sortie dudit second moyen de filtrage (40) et auxdits premier et second moyens d'extraction (43, 44), et adapté pour additionner lesdits seconds s signaux et lesdits signaux de commande,
- un second circuit additionneur (46) adapté pour additionner les signaux de sortie dudit premier circuit additionneur (42) et les signaux de sortie dudit circuit de sélection (45), et pour les fournir audit câble de sortie (29) dudit module de commutation (27).

3. Système selon la revendication 1 ou 2, dans lequel lesdits signaux TV comprennent des signaux satellites et non satellites et dans lequel ledit shunt est adapté pour recevoir lesdits signaux non satellites et lesdits signaux satellites sur différents câbles verticaux (22, 24a-24d).

4. Système selon la revendication 3, **caractérisé en ce que** ladite unité centrale (31) est adaptée pour recevoir ledit signal d' intercommunication vidéo et pour le transmettre sur ledit un ou lesdits plusieurs câbles verticaux, en conservant la même modulation et même attribution de fréquences.

5. Système selon la revendication 4, **caractérisé en ce que** ladite unité centrale est adaptée pour exécuter des fonctions de filtrage et d'égalisation des signaux reçus.

6. Système selon une des revendications 2 à 5, **caractérisé en ce que** ledit shunt (23) est adapté pour additionner les signaux reçus et pour les acheminer sur un unique câble de sortie (25) dudit shunt.

7. Système selon une des revendications s 3 à 6, **caractérisé en ce que** ledit shunt comprend un circuit de sélection (35) connecté audit premier moyen d'extraction (33) et adapté pour sélectionner un des signaux satellites extraits par ledit premier moyen d'extraction (33).

8. Système selon la revendication 7, **caractérisé en ce que** ledit circuit de sélection (35) est commandé par l'utilisateur via a un boîtier décodeur.

9. Système selon une des revendications précédentes, **caractérisé en ce que** ledit moyen de génération comprend un emplacement externe d'un système d'intercommunication vidéo (32) adapté pour générer et transmettre un signal d'intercommunication vidéo.

10. Système selon la revendication 9, **caractérisé en ce que** ladite unité centrale et ledit empiècement externe du système d'intercommunication vidéo (32) sont situés à deux extrémités opposées dudit premier câble vertical (22), et **en ce que** ladite unité centrale comprend des moyens adaptés pour mettre fin audit signal d'intercommunication vidéo transmis depuis ledit emplacement externe du système d'intercommunication vidéo.

11. Système selon la revendication 10, **caractérisé en ce que** ledit second moyen d'extraction (34) est adapté pour acheminer des commandes de retour depuis une intercommunication vidéo dudit système d'intercommunication vidéo sur ledit premier câble vertical.

12. Système selon une des revendications 3 à 11, **caractérisé en ce que** ledit shunt comprend un circuit additionneur (39) adapté pour acheminer sur un unique câble de sortie (25, 29) dudit shunt (23) lesdits signaux satellites sélectionnés par l'intermédiaire dudit circuit de sélection, lesdits premiers signaux non satellites extraits par l'intermédiaire dudit premier moyen d' extraction, et ledit signal d'intercommunication vidéo extrait par l'intermédiaire dudit second moyen d'extraction.

13. Système selon une des revendications précédentes, **caractérisé en ce que** lesdits modules de signaux (18, 19, 20, 21) sont adaptés d'une part au type de câble de distribution, et d'autre part au protocole de transmission du signal qui peut être capté à travers lesdits modules de signaux.

14. Système selon la revendication 13, **caractérisé en ce que** ladite unité centrale est adaptée pour exécuter les fonctions d'un point d'accès pour des réseaux locaux sans fil, en particulier de type Wifi.

15. Système selon la revendication 14, **caractérisé en ce que** ladite unité centrale est adaptée pour recevoir des signaux radioélectriques de type Wifi via ledit câble vertical 22.

16. Système selon la revendication 14, **caractérisé en ce que** certains desdits premiers modules comprennent un émetteur-récepteur passif adapté pour recevoir et transmettre des signaux de type Wifi.

17. Système selon une des revendications 1 à 16, dans lequel lesdits premiers et/ou seconds modules sont découplés et isolés.

18. Procédé de distribution de signaux à une pluralité de modules (18, 19, 20, 21) d'un local, comprenant les étapes suivantes :
- réception de signaux TV (2-11)
- transmission desdits signaux TV sur un ou plusieurs câbles verticaux (22, 24a-24d) avec la même modulation et attribution de fréquences que celles avec lesquelles ils ont été reçus,
- réception des signaux TV transmis sur ledit câble vertical dans des premiers modules (16) connectés de façon fonctionnelle audit un ou auxdits plusieurs câbles verticaux,
**caractérisé par** les étapes suivantes :
- transmission sur ledit un ou lesdits plusieurs câbles verticaux (22, 24a-24d) d'un signal d'intercommunication vidéo (1) comprenant au moins une alimentation continue pour des équipements utilisateur connectés aux seconds modules (19) connectés de façon fonctionnelle audit un ou auxdits plusieurs câbles verticaux;
- la prise en charge desdits signaux TV et dudit signal d'intercommunication vidéo depuis ledit un ou lesdits plusieurs câbles verticaux et leur distribution sur un unique câble (25, 29) alimentant lesdits premiers (18) et/ou lesdits seconds (19) modules
- la réception un signal téléphonique, comprenant un signal vocal relatif, sur une ligne téléphonique (26),
- la distribution sur ledit unique câble (29) d'un du signal, vocal du signal d'intercommunication vidéo et du signal vocal du signal téléphonique.

19. Procédé selon la revendication 18, dans lequel lesdits signaux TV et ledit signal d'intercommunication vidéo sont entrés aux deux extrémités du, même câble vertical.

20. Procédé selon les revendications 18 ou 19, dans lequel le signal vocal du signal téléphonique est distribué en soulevant le combiné téléphonique.

21. Système permettant de réaliser le procédé selon une des revendications 18 à 20.
